# EUROPEAN PATENT APPLICATION

(11) **EP 2 541 474 A1**
(43) Date of publication of application: **02.01.2013**
(21) Application number: 11305826.7
(22) Date of filing: 29.06.2011
(51) Int. Cl.: G06Q 10/00

(54) **Monitoring a user activity using a mobile device**

(71) Applicant: France Télécom, 75015 Paris (FR)
(72) Inventor: Rersa, Marc, 08023 Barcelona (ES); Brezmes, Tomas, 08005 Barcelona (ES); Gorricho, Juan-Luis, 08042 Barcelona (ES)
(74) Representative: Cabinet Plasseraud

(57) **Abstract**

The present invention relates to a method of monitoring a user activity using a mobile device, the method comprising the steps of measuring (110) at least one parameter (Pᵢ) with the mobile device, inferring (120) from this measured parameter an instantaneous user activity (IUA), comparing (130) this inferred instantaneous user activity (IUA) with a scheduled user activity (SUA) derived from the entry in an agenda corresponding to the time interval of said measured parameter and performing (140) a corrective action when the inferred user activity does not correspond to the scheduled user activity.

## Description

### Field of the invention

The present invention relates to the field of monitoring, and more particularly to the monitoring of a user activity using a mobile device.

### Background of the invention

User activity monitoring presents a considerable potential for a whole range of new applications in very different environments, such as general user surveillance, military purposes, emergency situations, health-care, etc.

For example, in the health-care area, possible applications can relate to the monitoring of elderly people or patients suffering some particular illnesses. Besides, nowadays our society is more than ever exposed to an aging population, which is one of the main concerns of present governmental administrations. For this reason, any technical approach alleviating the ever increasing health-care budget is welcomed.

Recent progress in communication technologies and sensor miniaturization has opened the door to the possibility of implementing new approaches on user activity monitoring at a reasonable cost.

In particular, at present, there is an increasing number of commercial cell phones equipped with different sensors, such as tri-axial accelerometers, magnetometers, ambient light sensors, etc. By using some of these sensors in a proper way, it is possible to monitor the user activity with a reasonable accuracy.

However, most of known human activity monitoring approaches have demonstrated to suffer the following drawbacks:
- They use only very specific hardware and require necessary sensor elements such as accelerometers, gyroscopes and magnetometers.
- The sensor units have to be placed on specific body locations (hip, wrist, upper arm) and usually have to fulfil specific tilt orientations to work properly.
- Sensor data are collected and locally transmitted using short-range wireless technologies, mostly Bluetooth, to communicate the sensor's data to a remote processing unit or to communicate the data to a wireless device which would then retransmit the data to the remote processing unit. This remote processing unit finally processed the information to classify the human activity.

To overcome some of these drawbacks, single devices embedding the necessary sensors to obtain the required data, process this data and finally classify the human activity without the participation of a remote processing unit have been designed.

However, such solutions are limited to the mere use of the embedded sensors and thus do not take into account other type of information beside the specific measurements of the sensors when monitoring a user's activity.

### Summary of the invention

It is thus an object of the present invention to provide a solution for monitoring a user activity which does not rely entirely on embedded sensors in a mobile device, but also use other type of information inputted by the user himself, to check this user activity.

It is another object of the present invention to provide a monitoring method able to detect abnormal or unscheduled user activities by crossing activity information obtained from measurements carried out by a mobile device with activity information scheduled for the user.

According to a first aspect of the present invention, there is provided a method of monitoring a user activity using a mobile device, the method comprising the steps of measuring at least one parameter with the mobile device, inferring from the measured parameter an instantaneous user activity, comparing the inferred instantaneous user activity with a scheduled user activity derived from the entry in an agenda corresponding to the time interval of the measured parameter, and performing a corrective action when the inferred user activity does not correspond to the scheduled user activity.

In an embodiment, the step of performing the corrective action comprises correcting the entry in the agenda based on the inferred instantaneous user activity.

In another embodiment, the step of performing the corrective action comprises correcting the inferred instantaneous user activity based on the entry in the agenda.

Advantageously, the step of performing a corrective action comprises issuing an alert. In particular, the issued alert can be transmitted to a remote device.

In an advantageous embodiment, the method comprises the step of deriving the scheduled user activity from the entry in the agenda using a semantic analysis of the entry in the agenda corresponding to the time interval of said measured parameter.

According to another embodiment, the method comprises the step of pushing the corrected activity to a social network the user of the mobile device is a member of and publishing the corrected activity on said social network.

According to a further aspect of the invention, there is provided a mobile device for monitoring a user activity comprising a controller unit and a sensor unit, wherein the sensor unit is configured to measure at least one parameter and wherein the controller unit is configured to infer from the measured parameter an instantaneous user activity, compare the inferred instantaneous user activity with a scheduled user activity derived from the entry in an agenda corresponding to the time interval of said measured parameter and trigger a corrective action when the inferred user activity does not correspond to the scheduled user activity.

In an embodiment, the mobile device comprises a memory unit on which the agenda is stored, the controller unit being further configured to retrieve from the agenda the entry corresponding to the time interval of the measured parameter and to derive from this retrieved entry the scheduled user activity.

In another embodiment, the mobile device comprises a communication unit able to communicate with a remote server on which the agenda is stored, the controller unit being further configured to control the communication unit for retrieving, from the agenda stored on the remote server, the entry corresponding to the time interval of said measured parameter and to derive from this retrieved entry the scheduled user activity.

According to a further aspect of the invention, there is provided a system for monitoring a user activity, the system comprising a mobile device as described previously and a server on which an agenda is stored, wherein the controller unit of the mobile device is configured to control the communication unit for retrieving, from the agenda stored on the remote server, an entry corresponding to the time interval of the measured parameter, derive from this retrieved entry a scheduled user activity, compare an instantaneous user activity inferred from at least one parameter measured by the mobile device with the scheduled user activity, and trigger a corrective action when the inferred user activity does not correspond to the scheduled user activity.

According to a further aspect of the invention, there is provided a computer program product for monitoring a user activity, using a mobile device having a controller unit with processing means, the computer program product comprising instructions for, when loaded and run on the processing means of said controller unit, carrying out the steps of inferring an instantaneous user activity from at least one measured parameter measured by the mobile device, comparing the inferred instantaneous user activity with a scheduled user activity (SUA) derived from the entry in an agenda corresponding to the time interval of the measured parameter, and triggering a corrective action when the inferred user activity does not correspond to the scheduled user activity.

### Brief Description of the Drawings

Other features and advantages of the invention will become apparent from the following description of non-limiting exemplary embodiments, with reference to the appended drawings, in which:
- Figure 1 is a flow chart illustrating the steps of a method of monitoring a user activity according to the present invention; and
- Figure 2 shows a simplified block diagram of a mobile device and a system for monitoring a user activity according to the present invention.

### Detailed Description of the Invention

Next some embodiments of the present invention are described in more detail with reference to the attached figures.

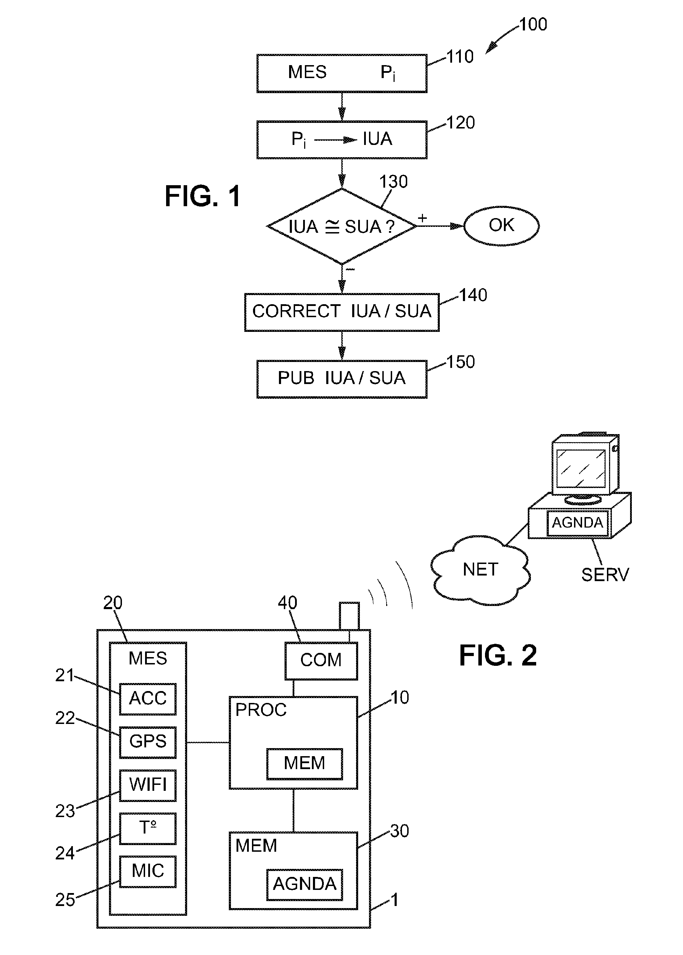

**Figure 1** discloses the steps of a method of monitoring a user activity according to the present invention.

This method 100 starts with the measurement (step 110) of at least one parameter Pᵢ with a mobile device. Figure 1 illustrates the specific case where a single parameter Pᵢ is measured, but any number of parameters P₁,..., Pᵢ, ..., Pₙ can be measured. For that purpose, a sensor dedicated to the measurement of such parameter(s) Pᵢ is used in the mobile device.

The measured parameter(s) Pᵢ can be chosen among the following possible parameters:
- the acceleration of the mobile device;
- the outdoor or indoor location of the mobile device;
- the temperature, the ambient light level, the noise level of the environment of the mobile device.

Once a parameter Pᵢ has been measured, an instantaneous user activity (designated by IUA) is inferred from this measured parameter Pᵢ (step 120).

For instance, several user activities can be classified in advance according to different ranges of acceleration values, and one of these classified activities can be inferred by choosing the activity associated with an acceleration range including the measured acceleration.

Once the instantaneous user activity IUA has been inferred, this instantaneous user activity IUA can be memorised in a specific data filed stored in a memory unit of the mobile device and is compared (step 130) with a scheduled user activity (designated by SUA), in order to check if there is a discrepancy between these activities which could be indicative of an error to be corrected or an abnormality.

The scheduled user activity SUA is derived from the entry in an agenda belonging to the user, such an entry corresponding to the time interval of the measured parameter Pᵢ, and can be indicated in a specific data field stored in the memory unit of the mobile device.

For that purpose, the entry in the agenda can be retrieved either locally on the mobile device, when such an agenda is stored in the mobile device, or remotely by accessing a server on which the agenda is stored.

In this later case, once the instantaneous user activity IUA has been inferred, the mobile device can send a request to retrieve the agenda entry corresponding to the time interval of the measured parameter Pᵢ in the server, and once this entry has been received from the server, derive locally scheduled user activity SUA from this entry.

Once the entry has been retrieved by the mobile device, the scheduled user activity SUA can be extracted from this entry, by performing multiple analysis such as a semantic analysis in order to find keywords, a pre-defined activity type analysis of the entry in the agenda revealing this scheduled activity.

For instance, a dictionary of keywords designating activities (for instance "running", "flying", "working", etc.) can be stored and used when analyzing semantically the content of the retrieved entry, in order to find occurrences of such keywords in this content. It could be enhanced with a pre-defined activity typology designating specific activities such as "Leisure", "Travel", "Meeting", among others.

It is advantageous to use a specific activity semantic that can be improved easily to take into account new activities. Every scheduled activity can be tagged using such a semantic. Using this tagging system enables a very easy and effective way to extract user scheduled activity.

Furthermore, this tagging system can be complemented by accurate data relating to specifics data concerning the inferred user activity IUA and provided by the device sensors. That is to say, for each tag designating a specific scheduled user activity SUA, a set of defined sensors values is associated. That enables a double checking of the combination "Tag + Sensor Values". The scheduled user activity SUA can then be deduced from the tags, based on detected keywords & pre-defined activity type extracted from the content of this entry. It can be compared to a XML scheme comprising commonly used tags and/or specific tags, extracted from user semantic analysis.

The comparison of the inferred instantaneous user activity IUA with the scheduled user activity SUA can be then implemented by comparing the content of the specific data fields associated with instantaneous user activity IUA and the scheduled user activity SUA.

This comparison can be implemented by comparing data fields associated respectively with the inferred instantaneous user activity IUA and the scheduled user activity SUA.

In an embodiment wherein the inferred user activity IUA and the scheduled user activity SUA are represented by a set of comprising a tag and sensor values, the sets of tags and sensor values from both the inferred user activity IUA and the scheduled user activity SUA will be compared, with a error estimation based on values.

If the comparison shows that the instantaneous user activity IUA corresponds to the scheduled user activity SUA, then one has the confirmation that the current user activity is indeed the user activity which was scheduled in the user's agenda and no corrective action needs to be taken. On the other hand, further action could be done based on SUA/IUA confirmation such as triggering a specific message (SMS, MMS, email, Tweet, Message Facebook, Blog message, etc...). These messages could be used on many purposes such as a presence confirmation at the hospital for elderly people, practicing some specific rehabilitation exercises, and so on.

However, if the comparison shows that the instantaneous user activity IUA does not correspond to the scheduled user activity SUA, this is indicative of the fact that there is a discrepancy between the current user activity and the scheduled activity in his agenda.

Such a discrepancy can be indicative of an error when entering the activity in the agenda, an error when measuring the current user activity, or a potential problem with the user who is not behaving as scheduled in his agenda.

Thus, once it has been detected that the instantaneous user activity IUA does not correspond to the scheduled user activity SUA, a corrective action is performed (step 140).

The nature of such a corrective action will depend on the type of application targeted when using the method according to the present invention. There are many corrective actions that could be undertaken: the scheduled user activity SUA could be corrected automatically, based on the inferred user activity IUA and the tags and sensor values as defined before) or by user action, the inferred user activity IUA could be corrected, or both SUA and IUA could be corrected.

In a first embodiment, the method is used for updating a user's agenda on the basis of his current activity. In other words, in such an embodiment, the inferred instantaneous user activity IUA is considered to take priority over the scheduled user activity SUA, when deciding which activity is the most probably correct one.

In this embodiment, the corrective action performed after detecting a discrepancy between the instantaneous user activity IUA and the scheduled user activity SUA comprises the correction of the entry in the agenda, which corresponds to the time interval of the measured parameter Pᵢ, based on the inferred instantaneous user activity IUA.

For instance, if the user was supposed to be flying to another country in his agenda at a certain time, and his inferred instantaneous user activity IUA, measured for instance by determining its position and speed, reveals that he is rather walking in his home city, the agenda entry can be updated to show that the user is still in his home city.

In another embodiment, the method is used for correcting information about the user's current activity on the basis of his agenda. In other words, in such an embodiment, the scheduled user activity SUA is considered to take priority over the inferred instantaneous user activity IUA when deciding which activity is the most probably correct one.

For example, if the user is supposed to be at home working based on his agenda, there are many inferred user activity IUA from his "in-house" activity that could be detected. Nevertheless, the scheduled user activity SUA (derived from an agenda entry) can be considered as having a higher priority than the inferred user activity IUA.

In this embodiment, the corrective action performed after detecting a discrepancy between the instantaneous user activity IUA and the scheduled user activity SUA comprises the correction of the inferred instantaneous user activity IUA based on the entry in the agenda which corresponds to the time interval of the measured parameter Pᵢ.

As mentioned previously, the scheduled user activity SUA is derived from the entry in the agenda which corresponds to the time interval of the measured parameter Pᵢ. This operation can be implemented by determining, in the mobile device, the time of measurement of the parameter Pᵢ and looking into the user's agenda for the time interval which contains this time of measurement, in order to retrieve the entry indicated in this agenda for this specific time interval.

In an embodiment where in the user agenda is stored remotely in a server, the mobile device transmits a request to this server in order to retrieve the entry corresponding to this specific time interval. It is also possible to send the inferred instantaneous user activity IUA to such a server, the tasks of deriving the scheduled user activity SUA from the entry in the agenda corresponding to the time interval of the measured parameter Pᵢ and of comparing these two activities being performed remotely in this server.

In an embodiment wherein the user is a member of a social network and wishes to publish his activities on this social network, the corrected activity (be it the instantaneous activity IUA or the scheduled activity SUA) can be pushed (step 150) to this social network and published in such a social network.

For instance, when the user wishes to publish his agenda on Facebook for his contacts, its corrected scheduled user activity SUA ("staying in home city" instead of the scheduled "flying to another country") can be pushed and published on Facebook in order to inform the contacts in real-time of the most probable activity of this user.

In another embodiment, the correction action comprises the issuance of an alert. The mobile device 1 can display such an alert or emit an alert signal to inform the user of the discrepancy between the scheduled and the measured instantaneous activities.

This alert can be transmitted to a remote device, such as a supervising central computer in a monitoring system, in order to inform a supervisor of the discrepancy between the scheduled user activity and the instantaneous activity measured by the user's mobile device, which may be indicative of an abnormal or unscheduled activity.

Such an implementation is particularly appropriate in the context of elderly people monitoring, wherein a detected abnormal activity can indicate a health issue concerning the monitored user.

**Figure 2** shows a simplified block diagram of a mobile device and a system for monitoring a user activity according to the present invention.

The mobile device 1 used in the present invention comprises a controller unit 10 and a sensor unit 20, and can be implemented as a cell phone, a smartphone or any other kind of portable device.

The sensor unit 20 of the mobile device 1 is in particular configured to measure one or more parameters P₁,...,Pᵢ,...,Pₙ and to provide data reflecting the measured parameter to the controller unit 10.

This sensor unit 20 can thus comprises one or more sensors among the following sensors:

### ● A tri-axial accelerometer and a magnetometer 21 :

With such sensors, the following user's movements can be detected by measuring a parameter Pᵢ corresponding to the acceleration of the mobile device:
● Walking:
● Jogging.
● Running.
● Cycling.
● Travelling by car, train.
● Riding a horse.
● Climbing-up stairs & climbing-down stairs:
● Stand-up.
● Sit-down.
● Fall-down.

These movements can be recognized with no predefined orientation of the device.

### ● A GPS receiver 22 :

With such a sensor, a parameter Pᵢ corresponding to the outdoor location of the user's mobile device, thus indirectly of the user himself, can be monitored.

### ● A Wi-fi receiver to monitor the user indoor location 23 :

With such a sensor, a parameter Pᵢ corresponding to the indoor location of the user's mobile device, thus indirectly of the user himself, can be monitored.

### ● A temperature sensor 24 :

With such a sensor, a parameter Pᵢ corresponding to the temperature of the user's mobile device environment, thus indirectly of the user's environment itself, can be monitored.

### ● A microphone 25 :

With such a sensor, a parameter Pᵢ corresponding to the noise level of the user's mobile device environment, thus indirectly of the user's environment itself, can be monitored.

### ● An air quality sensor (not illustrated) :

With such a sensor, a parameter Pᵢ corresponding to the air quality of the user's mobile device environment, thus indirectly of the user's environment itself, can be monitored.

### ● An ambient light sensor (not illustrated) :

With such a sensor, a parameter Pᵢ corresponding to the light level of the user's mobile device environment, thus indirectly of the user's environment itself, can be monitored.

In particular, when sensor unit 20 comprises several sensors, combining the information from these sensors allows obtaining a greater accuracy about the user movements along with his indoor and outdoor location.

In an embodiment, the controller unit 10 comprises processing means and is configured to infer, from the data corresponding to the measured parameter Pᵢ received from the sensor unit, an instantaneous user activity IUA.

For instance, when the acceleration measured by a tri-axial accelerometer indicates that the user is currently walking, the instantaneous user activity IUA is defined as being "walking" and can indicated as such in a specific data field by the controller unit 10.

The controller unit 10 is further configured to compare this inferred instantaneous user activity IUA with a scheduled user activity SUA. This scheduled user activity SUA is derived from the entry in an agenda corresponding to the time interval of said measured parameter.

The controller unit 10 is further configured to trigger a corrective action when the inferred user activity does not correspond to the scheduled user activity.

In an embodiment shown in figure 2, the mobile device 1 further comprises a memory unit 30 on which the agenda is stored. Such an embodiment allows the mobile device 1 to carry on its own the method according to the present invention, without having to access another entity. In such a case, the mobile device can be a non-communicating device or a mobile communication device working "off-line".

In such an embodiment, the controller unit 10 is further configured to retrieve from the agenda said entry corresponding to the time interval of said measured parameter and to derive from this retrieved entry the scheduled user activity SUA.

In another embodiment, also shown in figure 2, the mobile device 1 further comprises a communication unit 40 able to communicate, via a wireless network NET, with a remote server SERV on which the agenda may be stored.

The controller unit is then further configured to control the communication unit 40 for retrieving, from the agenda stored on the remote server SERV, the entry corresponding to the time interval of said measured parameter and to derive from this retrieved entry the scheduled user activity SUA.

A system for monitoring a user activity can thus be defined as comprising such a mobile device 1 and the remote server SERV, which can communicate to exchange the entry in the agenda, the inferred instantaneous user activity IUA or the scheduled user activity SUA in order to perform some, or all, of the steps of the method of monitoring either locally, in the mobile device 1, or remotely, in the server SERV.

The invention also relates to a computer program product for monitoring a user activity, which uses a mobile device having a controller unit with processing means such as the mobile device 1 described in figure 2, this computer program product comprising code instructions for carrying out some, or all, of the above-mentioned steps of the method of monitoring a user activity, when loaded and run on the processing means of the controller unit of this mobile device.

This computer program may be stored or distributed on a suitable medium supplied together with or as a part of other hardware, but may also be distributed in other forms, such as via the Internet or other wired or wireless telecommunication systems.

While the invention has been illustrated and described in detail in the drawings and foregoing description, such illustration and description are to be considered illustrative or exemplary and not restrictive, the invention being not restricted to the disclosed embodiments.

Other variations to the disclosed embodiments can be understood and effected by those skilled in the art in practicing the claimed invention, from a study of the drawings, the disclosure and the appended claims.

## Claims

1. A method of monitoring a user activity using a mobile device, the method comprising:
measuring (110) at least one parameter (Pᵢ) with the mobile device;
inferring (120) from said measured parameter an instantaneous user activity (IUA);
comparing (130) said inferred instantaneous user activity (IUA) with a scheduled user activity (SUA) derived from the entry in an agenda corresponding to the time interval of said measured parameter; and
performing (140) a corrective action when the inferred user activity does not correspond to the scheduled user activity.

2. The method according to claim 1, wherein performing the corrective action comprises correcting the entry in the agenda based on the inferred instantaneous user activity.

3. The method according to claim 1 or 2, wherein performing the corrective action comprises correcting the inferred instantaneous user activity based on the entry in the agenda.

4. The method according to any one of claims 1 to 3, wherein performing a corrective action comprises issuing an alert.

5. The method according to claim 4, wherein the issued alert is transmitted to a remote device.

6. The method according to any one of claims 1 to 5, further comprising deriving the scheduled user activity from the entry in the agenda using a semantic analysis of the entry in the agenda corresponding to the time interval of said measured parameter.

7. The method according to any one of claims 1 to 6, further comprising pushing the corrected activity to a social network the user of the mobile device is a member of and publishing (150) the corrected activity on said social network.

8. Mobile device for monitoring a user activity comprising a controller unit (10) and a sensor unit (20), wherein the sensor unit is configured to measure at least one parameter (Pᵢ) and wherein the controller unit is configured to :
infer from the measured parameter an instantaneous user activity (IUA);
compare said inferred instantaneous user activity with a scheduled user activity (SUA) derived from the entry in an agenda corresponding to the time interval of said measured parameter ; and
trigger a corrective action when the inferred user activity does not correspond to the scheduled user activity.

9. Mobile device according to claim 8, further comprising a memory unit (30) on which the agenda is stored, the controller unit being further configured to retrieve from the agenda said entry corresponding to the time interval of said measured parameter and to derive from this retrieved entry the scheduled user activity (SUA).

10. Mobile device according to claim 8 or 9, further comprising a communication unit (40) able to communicate with a remote server (SERV) on which the agenda is stored, the controller unit being further configured to control the communication unit for retrieving, from the agenda stored on the remote server, said entry corresponding to the time interval of said measured parameter and to derive from this retrieved entry the scheduled user activity (SUA).

11. System for monitoring a user activity, comprising a mobile device (1) according to claim 10 and a server (SERV) on which an agenda is stored, wherein the controller unit (10) of the mobile device is configured to:
control the communication unit for retrieving, from the agenda stored on the remote server, an entry corresponding to the time interval of said measured parameter;
derive from this retrieved entry a scheduled user activity (SUA);
compare an instantaneous user activity (IUA) inferred from at least one parameter (Pᵢ) measured by the mobile device with said scheduled user activity (SUA) ; and
trigger a corrective action when the inferred user activity does not correspond to the scheduled user activity.

12. Computer program product for monitoring a user activity, using a mobile device (1) having a controller unit (10) with processing means, the computer program product comprising instructions for, when loaded and run on the processing means of said controller unit (10), carrying out the following steps:
inferring (120) an instantaneous user activity (IUA) from at least one measured parameter (Pᵢ) measured by the mobile device ;
comparing (130) said inferred instantaneous user activity (IUA) with a scheduled user activity (SUA) derived from the entry in an agenda corresponding to the time interval of said measured parameter; and
triggering (140) a corrective action when the inferred user activity does not correspond to the scheduled user activity.
